# EUROPEAN PATENT APPLICATION

(11) **EP 4 574 753 A1**
(43) Date of publication of application: **25.06.2025**
(21) Application number: 23218899.5
(22) Date of filing: 20.12.2023
(51) Int. Cl.: C01B 17/64, B01D 53/12, B01D 53/58, B01D 53/75, B01D 53/78

(54) **PRODUCTION OF AMMONIUM THIOSULFATE**

(71) Applicant: Azcvoc Investment in Commercial Enterprises & Management L.L.C., Dubai (AE)
(72) Inventor: HAJDU, Marek, Dubai (AE); LEHOCKY, Miroslav, Dubai (AE)
(74) Representative: Schwarz & Partner Patentanwälte GmbH

(57) **Abstract**

The present invention relates to a method for producing ammonium thiosulfate by contacting a gas stream comprising hydrogen sulphide and ammonia with an aqueous solution comprising ammonium bisulphite and diammonium sulphite.

## Description

### TECHNICAL FIELD

The present invention relates to the field of treating waste refinery gases into nitrogen and sulfur containing compounds.

### BACKGROUND ART

At present, refineries remove naturally occurring nitrogen and sulfur compounds from crude oil to produce concentrated waste gases containing hydrogen sulfide and ammonia. These gases can also be generated by natural gas processing, coal gasification, coke or biomass gasification. Regulatory requirement towards sulfur content reduction in diesel and gasoline as well as deeper hydrocracking of feedstocks forces refineries to deal with the increased requirements for the disposal of waste gases. The resulting waste gases are typically treated in one or more sulfur recovery units to produce liquid sulfur while burning ammonia. The Claus SRU (Sulphur Recovery Unit) process is the most common way to treat refinery off-gases and is generally used as the main sour water stripper gas and amine acid gas treatment process.

As an alternative or in parallel to the Claus SRU process, waste gas is processed using ammonium thiosulfate (ATS), ammonium hydrogensulphite (ABS; ammonium bisulphite) and ammonium sulphite (DAS; diammonium sulphite) as an absorption solution for the absorption of SO₂. Thereby, a sulphite solution comprising ABS and DAS is formed, which is contacted with a feed gas from a sour water stripping unit ("sour water stripper gas", "SWSG") containing H₂S ("SWSG - H₂S") and NH₃ ("SWSG-NH₃") to form ATS without the addition of external ammonia ("NH₃-Ext"). The disadvantage of these processes is the indirect control of the pH of the solutions and thus the reduced absorption efficiency for SO₂ as well as the limitation of the production volume of ATS to the amount of NH₃ in the SWSG. For instance, the technology of Tessenderlo Kerley, Inc. (US 7,824,652), for instance, uses external ammonia and utilizes two separate absorption circuits, wherein in the first circuit SO₂ is absorbed to produce a highly concentrated sulphite solution comprising ABS and DAS, which is subsequently utilized in a second absorption circuit to react with SWS gas to form ATS.

US 2008/0050302 A1 discloses a process to produce ammonium thiosulfate from gas streams comprising ammonia and hydrogen sulfide, wherein the pH is controlled indirectly by the amount of sulfur dioxide or ammonia in said gas streams.

US 6,159,440 relates to the production of ammonium thiosulfate from H₂S, SO₂, and NH₃. The pH of the process solutions is controlled by adding gaseous NH₃ to the respective absorbers.

US 2002/0131927 A1 aims to produce ATS, wherein a SWSG stream first enters a pre-scrubber column to remove trace amounts of impurities in the gas. Sulphur dioxide is added to the process to maintain the appropriate pH.

Another major task relates to the cost and time efficient that meets the environmental emission limits, while maintaining the volume of ATS produced.

Hence, the object of the present invention is to provide an efficient process for producing ammonium thiosulfate.

### SUMMARY OF THE INVENTION

The present invention relates to a method for producing ammonium thiosulfate comprising the steps of
a) contacting in a first reactor a first gas stream comprising hydrogen sulphide and ammonia with a first circulating aqueous solution comprising ammonium bisulphite and diammonium sulphite to produce a first aqueous effluent solution comprising ammonium thiosulfate, ammonium bisulphite, and diammonium sulphite and a first flue gas stream comprising residual hydrogen sulphide and ammonia from said first gas stream,
b) contacting in a mixer the first aqueous effluent solution with ammonia to produce a second aqueous effluent solution comprising ammonium thiosulfate, ammonium bisulphite, diammonium sulphite and ammonia, wherein one part of the second aqueous effluent solution is taken as final product, and one part of the second effluent aqueous solution is fed into a second reactor as a third aqueous effluent solution,
c) combusting in a furnace the first flue gas stream of step a) and a second gas stream comprising hydrogen sulphide to produce a second flue gas stream comprising SO₂ with N₂ and NOₓ,
d) contacting in the second reactor the second flue gas stream of step c) with said third aqueous effluent solution to produce a fourth aqueous effluent solution comprising ammonium bisulphite and diammonium sulphite, wherein the fourth aqueous effluent solution is at least partially fed into the first reactor as the first circulating aqueous solution to contact with the first gas stream.

In particular, the present invention relates to a continuous process for the production of ammonium thiosulfate (ATS) using a solution comprising ammonium hydrogen sulphite (ABS; ammonium bisulphite) and ammonium sulphite (DAS; diammonium sulphite) as the primary absorbing agent and external ammonia (NH₃) for achieving a high absorption efficiency of sulfur dioxide (SO₂) resulting from the combustion of hydrogen sulphide from AG (amine gas from amine treating unit, referred to as "H₂S-100%") or SWSG (sour water stripper gas from sour water stripper unit). The solution comprising ABS and DAS forms a buffering capacity in the system, which, after the addition of a strong acid or base, is capable of maintaining a stable pH within a certain range, utilizing the absorption of acidic SO₂ or basic NH₃ gas. The solution comprising ABS and DAS is circulated through the absorption system, where it provides absorption and reaction with the SWS gas and SO₂.

Said method provides an efficient and simplified manufacturing method for ATS while relieving the capacity of the SRU. It turned out that with the method of the present invention, H₂S and NH₃ present in SWSG, for instance, can be highly efficiently converted into ATS. One of the major advantages of the claimed method is that substantially all of the H₂S and NH₃ comprised within a gas is removed from the gas stream, reducing the amount of harmful components in the flue gas. Furthermore, the present invention provides a simplified method to produce ammonium thiosulfate with a limited amount of reaction towers and other equipment compared to the state of the art, resulting in a time- and cost-efficient process while maintaining ATS production volume.

In a first step of the method of the present invention, a first gas stream comprising H₂S and NH₃ is contacted in a first reactor with a circulating aqueous solution comprising ABS and DAS to produce a first aqueous effluent solution comprising ATS and a flues gas of unreacted H₂S and NH₃.

In a second step of the method of the present invention, the first aqueous effluent solution comprising ATS is mixed with ammonia in a mixer to produce a second aqueous effluent solution. The ammonia can be externally added to the first effluent solution comprising ATS partly used and fed into a second reactor ("third aqueous effluent solution") to modify the pH of the reaction in the second reactor. Therefore, the addition of NH₃ has the advantage of providing sufficient NH₃ to be reacted with SO₂ to form ABS and DAS and to adjust the pH of the third aqueous effluent solution.

Another major advantage of the present invention is that the added ammonia is properly mixed with the first aqueous effluent solution in a mixer, preferably in a static mixer, increasing the efficiency of the process and producing the second aqueous effluent solution. One part of the second aqueous effluent solution is then taken as final product.

In a third step of the method of the present invention, the flue gas from the first step is contacted with a second gas stream of H₂S ("H₂S-1001"). This combined gas stream is combusted in a furnace to SO₂ with NOₓ, N₂ and H₂O using oxygen or air. Since SO₂ is required to obtain in a second reactor an aqueous solution comprising ABS and DAS, the second gas stream substantially consists of H₂S. This is advantageous because it reduces the amount of NOₓ in the flue gas.

In a second reactor, the flue gas obtained in the third step comprising SO₂, NOₓ, N₂ and H₂O is contacted with the third aqueous effluent solution comprising NH₃. SO₂ and NH₃ react in the presence of water to ABS and DAS ("fourth aqueous effluent solution"), which is required to form ATS in the presence of H₂S and NH₃ from SWSG. NH₃ is added to the first aqueous effluent solution.

The main advantage of the method described herein is that the solution comprising ATS, ABS and DAS also absorbs very low concentrations of SO₂ at a very high absorption efficiency. This highly flexible production process allows the highly efficient recovery of sulfur and nitrogen components from the feed gas streams (SWSG or AG ("H₂S-100%")), resulting in lower environmental emission limits for SO₂ to the atmosphere.

Furthermore, the produced solution comprising ATS, ABS and DAS is a commercial product. The solution comprising ATS, ABS and DAS is used in a separate absorption system to absorb and react with H₂S and NH₃ from SWSG to form ATS with a low concentration of sulphites ABS and DAS. To achieve optimum sulfur recovery efficiency, the process uses a unique flow scheme to control the pH of solutions (by adding NH₃ to a mixer), sulphite concentration (ASB and DAS) and concentration of ATS in a single circulating solution loop. The present invention is not limited by the available NH₃ in the feed gas (SWSG). This process is highly flexible and controllable with additional ammonia (or aqueous NH₃), supplied as needed to ensure sufficient sulphite concentration (ABS and DAS) and control the pH of the process.

The process has many advantages such as:
1.) use part or all of the ammonia and hydrogen sulfide from feed gas (SWSG);
2.) capacity increase of the SRU by diverting part of the feed gas from the SRU to the production unit for ATS;
3.) high sulfur recovery efficiency to meet emission limits;
4.) simplified and efficient system due the limited amount of reactors and flow streams;
5.) high flexibility of feedstock (i.e. feed gas) composition;

The final product obtainable with the process of the present invention and comprising ATS may be controlled to contain ATS in a concentration from 50 wt% to 60 wt% ATS, which is primarily used for agricultural purposes, either alone or in combination with commonly used liquid fertilizers.

### BRIEF DESCRIPTION OF THE FIGURES

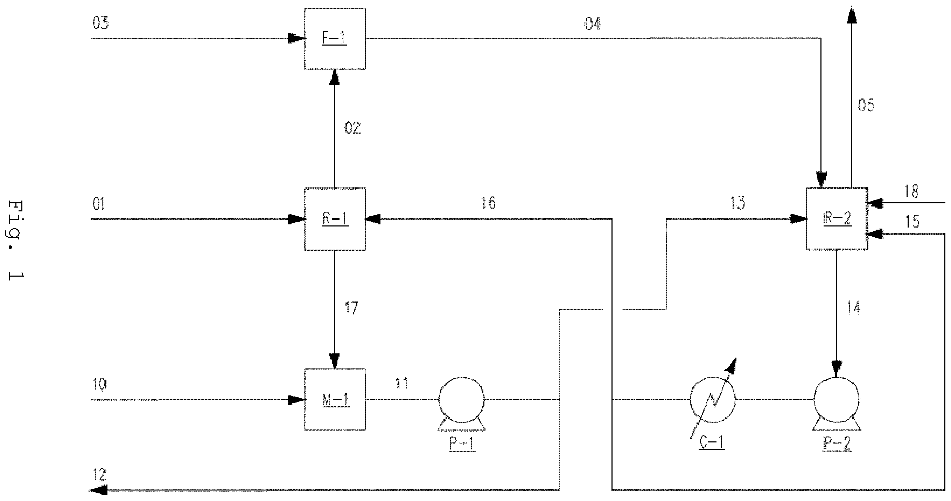

Fig. 1 is a diagram of an embodiment of the method of the present invention.

### DESCRIPTION OF EMBODIMENTS

According to a preferred embodiment of the present invention, the ammonia used in step b) is aqueous ammonia. Said aqueous ammonia may originate from an external source. According to the present invention, ammonia is added to the first aqueous effluent solution to produce a second aqueous effluent solution, wherein one part of the second solution is taken as final product, and another part is taken as a third aqueous effluent solution that is fed into the second reactor. Said ammonia is added before the second aqueous effluent solution is divided and the third solution enters the second reactor. According to the present invention, ammonia is added to a mixer to be properly mixed with the first aqueous effluent solution.

According to another preferred embodiment of the present invention, the first gas stream is contacted with the first circulating aqueous solution using a liquid distributor. In order to maximize the absorption of H₂S and/or NH₃ from the first gas stream into the first circulating aqueous solution, a liquid distributor can be used. This configuration has the advantage to distribute the gas within the aqueous solution efficiently.

According to another preferred embodiment of the present invention, step a) is performed at a temperature from 40°C to 60°C. It turned out that H₂S and/or NH₃ show the most efficient reaction rates when a temperature from 40°C to 60°C, is applied.

According to a particularly preferred embodiment of the present invention, the first gas stream comprises or consists of hydrogen sulphide and ammonium from sour water stripper gas (SWSG).

According to another preferred embodiment of the present invention, the first gas stream is contacted with the first circulating aqueous solution using a counter current reactor. Surprisingly, a counter current reactor can be used as the first reactor to form ATS, where the streams of from SWSG and the aqueous solution comprising ABS and DAS can be contacted.

According to a further preferred embodiment of the present invention, the second gas stream comprises hydrogen sulphide from amine gas. Herein, the hydrogen sulphide from amine acid gas is also referred to as "H₂S-100%". The unreacted gas leaving the first reactor ("first flue gas stream") is burned in a furnace with the second gas stream. According to a particularly preferred embodiment of the present invention, the furnace comprises an acid gas burner, a reaction furnace and a waste heat boiler.

According to another preferred embodiment of the present invention, the second flue gas stream is contacted with said third aqueous effluent solution using a gas liquid contact system. To ensure sufficient absorption of gaseous SO₂ into a solution comprising sulphites (ABS and DAS) followed by reaction to form ABS and DAS, the process uses a gas liquid contact system. To ensure sufficient absorption of gaseous H₂S and NH₃ from SWSG into solution (ATS) containing sulphites (ABS + DAS), the process uses an ATS reactor. A solution (ATS + ABS + DAS) is continuously circulated through the gas liquid contact system to ensure the absorption of the gaseous components. The circulating system uses one heat exchanger (air or cooling water cooler), which ensures a stable temperature of the absorption solutions. The whole system creates one large loop with different concentrations of ATS and for ABS and NH₃ in the different parts of the system. Preferably, the circulating solutions of the present invention are essentially free from ammonium bisulphite (DAS) .

The present invention differs to a large extent from conventional manufacturing processes for ATS, which utilize two separate absorption loops. It was found that at higher production loads for ATS respectively at high amounts of SO₂ treated, excessive degradation of the solutions results in ammonium sulphate due to the low pH. In this case, the process can be easily stabilized by adding ammonia. Because of the ability to stabilize the process, the process is very versatile and adaptable to different amounts and compositions of feedstocks. The absorption efficiency of SO₂ is particularly high because the absorption solution comprising ATS, ABS and DAS ("third aqueous effluent solution") can be controlled to a pH in the range of 6.5 to 8.5. The sulphite-rich solution formed in the gas liquid contact system comprising ATS, ABS and DAS ("fourth aqueous effluent solution") can be partly or fully circulated into an ATS production part ("first reactor") as the first circulating aqueous solution where H₂S and NH₃ from the feed gas SWSG react with ABS and DAS to form ATS.

The fourth aqueous effluent solution is at least partially fed into the first reactor as the first circulating aqueous solution to contact with the first gas stream. Hence, a part of the fourth aqueous effluent solution can be fed into the first reactor as the balance of the first circulating aqueous solution to contact with the first gas stream comprising H₂S and NH₃, and another part of the fourth aqueous effluent solution can be flown back to said second reactor. This means that the fourth aqueous effluent solution is fed into the first reactor as the first circulating aqueous solution or one part of the fourth aqueous effluent solution is fed into the first reactor as the first circulating aqueous solution and one part of the fourth aqueous effluent solution is flown to said second reactor.

The present invention further differs from conventional manufacturing processes for ATS in that the number of reaction towers is reduced to a minimum while still providing a highly efficient process. For instance, the aqueous effluent solution comprising ATS and flue gas is formed in the first reactor and is instantly directed to the furnace or mixer without the need for further reaction towers. It turned out that the simplified process of the present invention enhances the efficiency of ATS production compared to known methods in the art.

The method of the present invention allows to produce a solution which comprises a relatively high level of ATS. According to a preferred embodiment of the present invention, the second aqueous effluent solution comprises ammonium thiosulfate in a concentration of 50 wt% to 60 wt%.

According to a further preferred embodiment of the present invention, the second aqueous effluent solution comprises ammonium bisulphite and diammonium sulphite in a concentration of 2 wt% to 5 wt%.

Preferably, the second aqueous effluent solution comprises 11.5 to 12.5 wt% nitrogen, and 24.5 to 26.5 wt% sulfur, referred to as 50 to 60 wt% ammonium thiosulfate.

According to another preferred embodiment of the present invention, the flow rate ratio of the second aqueous effluent solution to the final product is in the range between 40:1 and 60:1.

According to another particularly preferred embodiment of the present invention, the flow rate ratio of the second aqueous effluent solution to the first gas stream is in the range between 100:1 and 200:1.

The pH of the second aqueous effluent solution of the present invention ranges preferably from 6.5 to 8.5.

Disclosed is also a method for producing ammonium thiosulfate comprising the steps of:
a) contacting in a first reactor a first gas stream comprising hydrogen sulphide and ammonia with a first circulating aqueous solution comprising ammonium bisulphite and diammonium sulphite to produce a first aqueous effluent solution comprising ammonium thiosulfate, ammonium bisulphite, and diammonium sulphite and a first flue gas stream comprising residual hydrogen sulphide and ammonia from said first gas stream,
b) contacting in a mixer the first aqueous effluent solution with ammonia to produce a second aqueous effluent solution comprising ammonium thiosulfate, ammonium bisulphite, diammonium sulphite and ammonia, wherein one part of the second aqueous effluent solution is taken as final product, and one part of the second effluent aqueous solution is fed into a second reactor as a third aqueous effluent solution,
c) combusting in a furnace the first flue gas stream of step a) and a second gas stream comprising hydrogen sulphide to produce a second flue gas stream comprising SO₂ with N₂ and NOₓ,
d) contacting in the second reactor the second flue gas stream of step c) with said third aqueous effluent solution to produce a fourth aqueous effluent solution comprising ammonium bisulphite and diammonium sulphite, wherein the fourth aqueous effluent solution is fed into the first reactor as the first circulating aqueous solution or wherein one part of the fourth aqueous effluent solution is fed into the first reactor as the first circulating aqueous solution and one part of the fourth aqueous effluent solution is flown to said second reactor.

Fig. 1 shows the basic process flow diagram. Both the amine regeneration unit and the sour water stripping unit are not shown in the diagram for simplicity. The SWSG **stream 01** enters and is absorbed into the circulating solution in the ATS reactor system **R-1** according to the reaction:

**H₂S (g) ↔ H₂S (aq)**

**NH₃ (g) ↔ NH₃ (aq)**

**H₂S (aq) + NH₃ (aq) ↔ (NH₄)HS (aq)**

and then reacts with the sulphite solution comprising ABS to form ATS according to the reaction:

**2(NH₄)HS (aq)) + 4 (NH₄)HSO₃ (aq) ->**

**3(NH₄)₂S₂O₃ (aq) + 3H₂O(l)**

"g" stands for gaseous, "aq" stands for aqueous and "l" stands for liquid.

In all circulating solutions, however, the sulphite equilibrium is maintained according to the reaction:

**(NH₄)HSO₃ (aq)** + **NH₃ (aq)** <-> **(NH₄)₂SO₃ (aq)**

depending on the pH and solution temperature.

It is necessary to mention that there may also a reaction:

**2H₂S (aq) + 4 (NH₄)₂SO₃ (aq) -> 3(NH₄)₂S₂O₃ (aq) + 2NH₃ (aq) + 3H₂O (l).**

Both ATS forming reactions have a high equilibrium constant of approximately Keq = 10¹² and are therefore virtually irreversible and run in one direction only. Since ammonia (NH₃) is a very weak base, the resulting solution will always contain a very low concentration of sulphide ions (S²⁻) resulting from the reactions:

**H₂S (aq) + H₂O (l) <-> HS⁻ (aq) + H₃O⁺ (aq)**

**HS⁻ (aq) + H₂O (l) <-> S²⁻ (aq) + H₃O⁺ (aq)**

**2NH₄⁺ (aq) + S²⁻ (aq) <-> (NH₄)₂S (aq)**

If the sulphite concentration (ABS and DAS) is very low (<1 wt%) and the pH of the circulating solutions is high (> 9.0), (NH₄)₂S will be formed to a significant extent with the consequent formation of polysulfides according to the reaction:

**(NH₄)₂S (aq) + (n-1)S (s) <-> (NH₄)₂Sn (aq, s)**

resulting in the colouring of the solutions to grey-black ("s" means solid).

This fact can serve as an initial indication of insufficient sulphite concentration (ABS and DAS) in solutions. Absorption of NH₃ from feed gas SWSG ("SWSG - NH₃") increases the pH, causing an increase in absorption of H₂S from feed gas SWSG ("SWSG - H₂S") and thus formation of ATS as well as adjusting the pH of the final product that is drawn into the storage by **stream 12.** The concentration of sulphites (ABS and DAS) in the final product is not less than 1 wt%. The content of ATS is controlled so that the final product comprises 50 to 60 wt%, ATS and 2 wt% to 5 wt ammonium sulphate which represents 11.5 to 12.5 wt% nitrogen and 24.5 to 26.5 wt%, sulphur. The pH in the final product ranges from 6.5 to 8.5.

To provide a sufficient amount of sulphites (ABS and DAS) required for the formation of ATS, a solution with a higher sulphite content (ABS and DAS) **stream 16** is delivered into reactor **R-1.** The optimal temperature in the reactor **R-1** from 40 to 60 °C. In general, the higher the temperature of the solution flowing in the ATS circulation loop, the less absorption of SWSG - H₂S and SWSG - NH₃ from the feed gas into the solution. On the other hand, the higher the temperature of the solution, the faster the reaction of SWSG - H₂S and SWSG - NH₃ from the feed gas for the ATS formation.

Unreacted gas flowing from top of **R-1 (stream 02)** is mixed with H₂S gas **stream 03** flowing from the amine treating unit in a furnace **F-1** consisting of an acid gas burner, reaction furnace, and waste heat boiler. In **F-1,** in the presence of an excess of oxygen, the reactions proceed as follows:

**2H₂S (g) + 3O₂ (g) -> 2SO₂ (g) + 2H₂O (g)**

**2SO₂ (g) + O₂ (g) -> 2SO₃ (g)**

**4NH₃ (g) + 3O₂ (g) -> 2N₂ (g) + 6H₂O (g)**

**4NH₃ (g) + 5O₂ (g) -> 4NO (g) + 6H₂O (g)**

**4NH₃ (g) + 7O₂ (g) -> 4NO₂ (g) + 6H₂O (g)**

The amount of SO₃ produced can depend on the combustion temperature at **F-1,** where the amount of SO₃ produced for combustion temperatures of 1100 to 1500°C is estimated to be 1 to 8% of the total amount produced SO₂. In the waste heat boiler of **F-1,** flue gas is cooled to 260 - 320°C. The flue gas flow temperature downstream **F-1** must not drop below the flue gas acid dew point of about 200 °C, since sulphuric acid (H₂SO₄) would form and excessive corrosion would occur on the system.

The flue gas stream from **F-1, stream 04,** comprising SO₂ and SO₃, also containing NOₓ, N₂, O₂ and H₂O, is absorbed into the circulating solution in the gas liquid contact system **R-2** to form ABS and DAS according to the reaction:

**SO₂ (g) <-> SO₂ (aq)**

**SO₂ (aq) + H₂O (l) <-> H₂SO₃ (aq)**

**H₂SO₃ (aq) + NH₃ (aq) <-> (NH₄)HSO₃ (aq),**

**(NH₄)HSO₃ (aq) + NH₃(aq) <-> (NH₄)₂SO₃ (aq)**

Since the flue gas stream also contains SO₃, ammonium sulphate is formed according to the reaction:

**SO₃ (g) + H₂O (l) <-> H₂SO₄ (aq)**

**2NH₃ (aq) + H₂SO₄ (aq) -> (NH₄)₂SO₄ (aq)**

The presence of O₂ may also causes oxidation of ABS and DAS according to the reaction:

**2(NH₄)HSO₃ (aq) + O₂ (g) + 2NH₃ (aq)-> 2(NH₄)₂SO₄ (aq)**

**2(NH₄)₂SO₃ (aq) + O₂ (g) -> 2(NH₄)₂SO₄ (aq)**

The formation of ammonium sulphate may significantly reduce the concentration of NH₃ in the system, resulting in a decrease in formation of ABS and DAS and increase the salt out temperature. For this reason, the formation of ammonium sulphate is undesirable.

Circulation of the solution through **R-2** is provided by pump **P-2.** Absorption of SO₂ in **R-2** lowers the pH in the circulating solution, which is why ammonia ("NH₃ - Ext") **stream 10** is added to the circulation solution.

The addition of ammonia allows to control the pH of all solutions circulating in the system easily and thereby control the formation of ABS and DAS by reactions described above.

Addition of ammonia ("NH₃ - Ext") is controlled to keep the pH of **stream 14** under control, all SO₂ and SO₃ from **stream 04** must react with ammonia ("NH₃ - Ext") or any other ammonia contained in **stream 13,** which is fed to **R-2** by pump **P-1.** The solution comprising ABS and DAS of higher concentration from **R-2** is transported by pump **P-2 stream 14** through a heat exchanger **C-1,** which ensures a stable temperature of the absorption solutions to **R-1.** Ammonia ("NH₃ - Ext") **stream 10** is introduced to **M-1** to ensure sufficient mixing with **stream 17.** The ratio of the flow rates of the circulating solution **stream 11** to the produced amount of ATS **stream 12** is in the range between 40:1 and 60:1. The sulphite concentration (ABS and DAS) in the circulating loop is controlled in the range of 3.0 - 5.0 wt%.

In **R-2,** flue gas is finally washed by introduced water **(stream 18).** The exhaust gas **stream 05** composition at the outlet of the **R-2** shall comply with the environmental limits for SO₂.

## Claims

1. A method for producing ammonium thiosulfate comprising the steps of
a) contacting in a first reactor (R-1) a first gas stream (01) comprising hydrogen sulphide and ammonia with a first circulating aqueous solution (16) comprising ammonium bisulphite and diammonium sulphite to produce a first aqueous effluent solution (17) comprising ammonium thiosulfate, ammonium bisulphite, and diammonium sulphite and a first flue gas stream (02) comprising residual hydrogen sulphide and ammonia from said first gas stream (01),
b) contacting in a mixer (M-1) the first aqueous effluent solution (17) with ammonia (10) to produce a second aqueous effluent solution (11) comprising ammonium thiosulfate, ammonium bisulphite, diammonium sulphite and ammonia, wherein one part of the second aqueous effluent solution (11) is taken as final product (12), and one part of the second effluent aqueous solution (11) is fed into a second reactor (R-2) as a third aqueous effluent solution (13),
c) combusting in a furnace (F-1) the first flue gas stream (02) of step a) and a second gas stream (03) comprising hydrogen sulphide to produce a second flue gas stream (04) comprising SO₂ with N₂ and NOₓ,
d) contacting in the second reactor (R-2) the second flue gas stream (04) of step c) with said third aqueous effluent solution (13) to produce a fourth aqueous effluent solution (14) comprising ammonium bisulphite and diammonium sulphite, wherein the fourth aqueous effluent (14) solution is at least partially fed into the first reactor (R-1) as the first circulating aqueous solution (16) to contact with the first gas stream (01).

2. The method of claim 1, wherein said ammonia used in step b) is aqueous ammonia.

3. The method of claims 1 or 2, wherein step a) is performed at a temperature from 40°C to 60°C.

4. The method of any one of claims 1 to 3, wherein the first gas stream (01) comprises or consists of hydrogen sulphide and ammonium from sour water stripper gas (SWSG).

5. The method of any one of claims 1 to 4, wherein the first gas stream (01) is contacted with the first circulating aqueous solution (16) using a counter current reactor.

6. The method of any one of claims 1 to 5, wherein the second gas stream (03) comprises hydrogen sulphide from amine gas.

7. The method of any one of claims 1 to 6, wherein the furnace (F-1) comprises an acid gas burner, a reaction furnace and a waste heat boiler.

8. The method of any one of claims 1 to 7, wherein the second flue gas stream (04) is contacted with said third aqueous effluent solution (13) using a gas liquid contact system.

9. The method of any one of claims 1 to 8, wherein the pH of said third aqueous effluent solution (13) is in the range of 6.5 to 8.5.

10. The method of any one of claims 1 to 9, wherein the second aqueous effluent solution (11) comprises ammonium thiosulfate in a concentration of 50 wt% to 60 wt%.

11. The method of any one of claims 1 to 10, wherein second aqueous effluent solution (11) comprises ammonium bisulphite and diammonium sulphite in a concentration of 2 wt% to 5 wt%.

12. The method of claims 10 or 11, wherein the second aqueous effluent solution (11) comprises 11.5 to 12.5 wt% nitrogen, and 24.5 to 26.5 wt% sulfur, referred to as 50 to 60 wt% ammonium thiosulfate.

13. The method of any one of claims 1 to 12, wherein the flow rate ratio of the second aqueous effluent solution (11) to the final product (12) is in the range between 40:1 and 60:1.

14. The method of any one of claims 1 to 13, wherein the flow rate ratio of the second aqueous effluent solution (11) to the first gas stream (01) is in the range between 100:1 and 200:1.

15. The method of any one of claims 1 to 14, wherein the second aqueous effluent solution (11) has a pH ranging from 6.5 to 8.5.
